# EUROPEAN PATENT APPLICATION

(11) **EP 4 223 092 A1**
(43) Date of publication of application: **09.08.2023**
(21) Application number: 22200648.8
(22) Date of filing: 10.10.2022
(51) Int. Cl.: A01B 79/00, A01D 41/127, A01B 69/00

(54) **COMPUTER IMPLEMENTED METHOD OF CONTROLLING AN AGRICULTURAL VEHICLE AND AGRICULTURAL VEHICLE CONTROLLABLE BY SUCH**

(30) Priority: 27.01.2022 US 202217586308
(71) Applicant: Deere & Company, Moline, IL 61265 (US)
(72) Inventor: Hubner, Cary S., Mannheim (DE)
(74) Representative: Reichert, Christian

(57) **Abstract**

A computer implemented method of controlling an agricultural vehicle (102) is disclosed. The method comprising: detecting (182) a sorting criterion value on the agricultural vehicle (102); obtaining (264) settings information based on the sorting criterion, the settings information being indicative of an aggregated setting value aggregated from a plurality of different agricultural vehicles with a corresponding sorting criterion; and controlling (276) the agricultural vehicle based on the settings information in the response. Furthermore, agricultural vehicle (102) controllable by such a method is disclosed.

## Description

### FIELD OF THE DESCRIPTION

The present description relates to agricultural equipment. More specifically, the present description relates to aggregating data from a plurality of different agricultural vehicles to generate settings data and control setting values on an agricultural vehicle.

### BACKGROUND

Agricultural equipment is currently in wide use. Such equipment can include harvesters (such as combine harvesters or other harvesters), planting equipment (such as air carts, planters, box drills, among other planting equipment), tillage equipment, material application equipment (such as sprayers), and other equipment. Such equipment can be relatively complex in operation.

Agricultural equipment also may have many different controllable subsystems that are controlled by settings values that are input by the operator or that are to be implemented using default values, automatically generated values, or other values. The optimum settings values may be different, based upon the different types of jobs that the vehicle is performing, or the different types of conditions under which the vehicle is operating. When the settings values are not optimally set, this can result in a reduction in yield or other suboptimal operation of the agricultural vehicle.

The discussion above is merely provided for general background information and is not intended to be used as an aid in determining the scope of the claimed subject matter.

### SUMMARY

Settings data is collected from a plurality of different agricultural machines and is sorted based on indexing criteria. The sorted data is aggregated to obtain metric values and stored based on the indexing criteria. An agricultural vehicle accesses the indexed, aggregated data to obtain settings data. The agricultural vehicle is controlled based upon the settings data.

In one embodiment a computer implemented method of controlling an agricultural vehicle, comprises: detecting a sorting criterion value on the agricultural vehicle; obtaining settings information based on the sorting criterion, the settings information being indicative of an aggregated setting value aggregated from a plurality of different agricultural vehicles with a corresponding sorting criterion; and controlling the agricultural vehicle based on the settings information in the response. Furthermore, obtaining settings information may comprise:
generating a request for settings information, the request being indicative of the sorting criterion;
sending the request for settings information to a setting processing system; and receiving a response to the request for settings information, the response including the settings information. In another embodiment controlling the agricultural vehicle may comprise: automatically setting a settings value for a controllable subsystem on the agricultural vehicle based on the aggregated setting value. Further, controlling the agricultural vehicle may comprise: controlling an operator interface system on the agricultural vehicle to generate an operator-observable output indicative of the aggregated setting value. In another embodiment, controlling the operator interface system may comprise: pre-populating a settings input interface display with the aggregated setting value;
detecting an operator input interacting with the user interface display; and controlling the agricultural vehicle based on the user interaction. In yet another embodiment, detecting the operator input may comprise: detecting an operator input modifying the pre-populated aggregated setting value on the settings input interface display to obtain a modified setting value and wherein controlling the agricultural vehicle comprises controlling the agricultural vehicle based on the modified setting value. Furthermore, detecting the operator input may comprise: detecting an operator input selecting the pre-populated aggregated setting value on the settings input interface display to obtain a selected setting value and wherein controlling the agricultural vehicle comprises controlling the agricultural vehicle based on the selected setting value. In a further embodiment, pre-populating a settings input interface display with the aggregated setting value may comprise: controlling an operator interface system to run a settings wizard to display the settings input interface display and pre-populating a settings input interface display in the wizard with the aggregated setting value. In a further embodiment, the method may comprise: detecting a setting value for a plurality of different settings on the agricultural vehicle; and sending the detected setting value for the plurality of different settings to the setting processing system.

The method may further comprise: receiving settings data indicative of a setting value of a controllable subsystem from a plurality of different agricultural vehicles; identifying sorting criteria corresponding to the received settings data; sorting the received settings data based on the sorting criteria to obtain a different set of sorted data corresponding to different values of the sorting criteria; aggregating the sorted data to obtain an aggregated setting value corresponding to each set of sorted data; receiving a request for setting data; and responding to the request with a requested aggregated setting value based on the request. Furthermore, responding to the request may comprise: parsing the request to identify sorting criteria corresponding to the request; and
identifying the requested aggregated setting value based on the sorting criteria corresponding to the request. Furthermore, identifying sorting criteria may comprises: identifying, as the sorting criteria, a geographic location of the agricultural vehicle from which the settings data was received.

Furthermore the method may comprise to identifying, as the sorting criteria, an operating condition under which the agricultural vehicle from which the settings data was received is operating.

Furthermore, an agricultural vehicle is controllable by a computer implemented method as described above. The vehicle may comprise a setting generation system, a local setting processing system, a controllable subsystem, an operator interface system"a data store including indexed aggregated data, one or more sensors, detecting a sorting criterion value on the agricultural vehicle, a control system, generating a request for settings information, the request being indicative of the sorting criterion, and a communication system, sending the request for settings information to the setting processing system and receiving a response to the request for settings information, wherein the response including settings information indicative of an aggregated setting value aggregated from a plurality of different agricultural vehicles with a corresponding sorting criterion, the control system controlling the controllable subsystem based on the settings information in the response.

The agricultural vehicle may further comprise: the setting generation system configured to generate a settings value for the controllable subsystem on the agricultural vehicle, the control system being configured to control the setting generation system based on the aggregated setting value.

### BRIEF DESCRIPTION OF THE DRAWINGS

FIG. 1 is a block diagram of one example of an agricultural system.
FIG. 2 is a block diagram showing one example of a control system.
FIG. 3 is a flow diagram illustrating one example of how settings data is generated.
FIG. 4 is a flow diagram illustrating one example of how settings data is served in response to a request.
FIG. 5 is a flow diagram illustrating one example of how a control output is generated based upon the settings data.
FIG. 6 shows one example in which an agricultural vehicle is a harvester.
FIG. 7 shows an example in which the agricultural vehicle is a planter.
FIG. 8 shows another example in which the agricultural vehicle is a planter.
FIGS. 9 and 10 show examples of row units.
FIG. 11 is a block diagram showing one example of the agricultural system shown in FIG. 1, deployed in a remote server architecture.
FIGS. 12-14 show examples of mobile devices.
FIG. 15 is a block diagram showing one example of a computing environment that can be used in the architectures illustrated in other Figures.

### DETAILED DESCRIPTION

As discussed above, it can be difficult for an operator to know what settings values to use, especially on relatively complex agricultural equipment. This can lead to sub-optimal operation. The present description thus describes a system in which multiple agricultural vehicles provide settings data, indicative of the value of the various settings on those vehicles, to a setting processing system. The settings data is aggregated and indexed based on indexing criteria. The indexing criteria may be such things as geographic location, conditions under which the agricultural vehicle is operating, terrain data, or other indexing criteria. The aggregated data may indicate an aggregated value for a setting used to control a controllable subsystem on the agricultural vehicle. The aggregated value may be an average value, a mean value, etc. The indexed, aggregated data can be stored at a remote server location and/or intermittently or continuously downloaded to be stored locally on a setting processing system on an agricultural vehicle. The agricultural vehicle can then submit a request for the indexed, aggregated data in order to assist in setting values for the different settings on the agricultural vehicle. A response to the request may include a representation of the setting value generated for the aggregated data that can be used to control the agricultural vehicle.

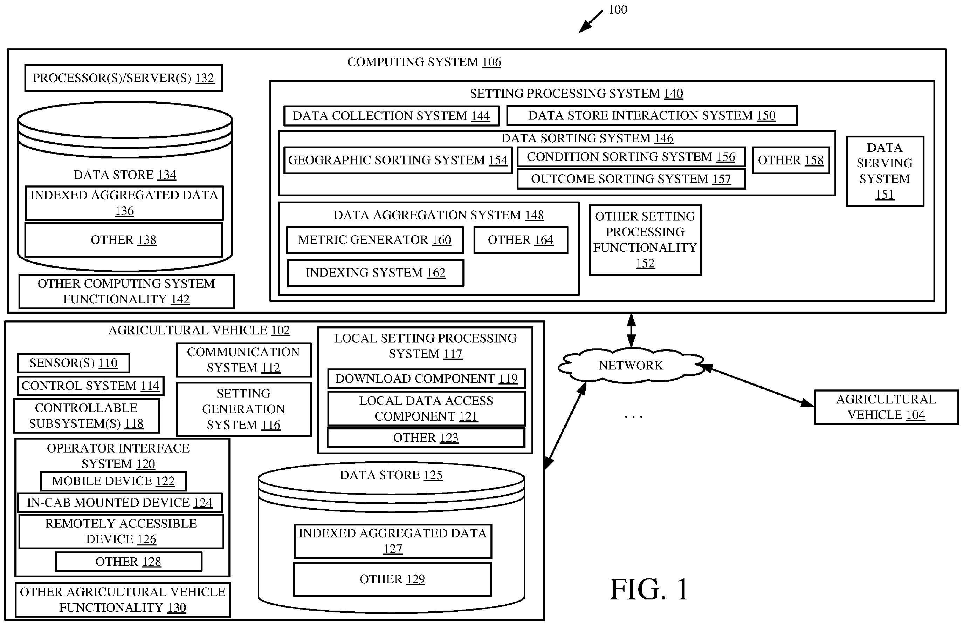

FIG. 1 is a block diagram of one example of an agricultural system 100. System 100 includes a plurality of different agricultural vehicles 102-104 that may be connected to computing system 106 over a network 108. Network 108 can thus be a wide area network, a local area network, a near field communication network, a cellular communication network, or any of a wide variety of other networks or combinations of networks. In the example shown in FIG. 1, computing system 106 is shown separate from vehicles 102-104. This is only one example and part or all of system 106 may reside on one or more of vehicles 102-104 or be distributed in other ways.

Agricultural vehicles 102-104 may be any of a wide variety of different types of agricultural vehicles. Such vehicles can include harvesters, such as combine harvesters, cotton harvesters, forage harvesters, etc. Such vehicles can also include planters, such as air seeders, row unit planters, box drills, etc. The agricultural vehicles 102-104 may include vehicles that apply material to the ground, such as sprayers, or other application vehicles. The vehicles 102-104 may include tillage vehicles, or any of a wide variety of agricultural vehicles.

Agricultural vehicles 102-104 may be similar vehicles or different vehicles. For purposes of the present description, it is assumed that they are similar vehicles so that only agricultural vehicle 102 is described in greater detail. In the example shown in FIG. 1, agricultural vehicle 102 includes one or more sensors 110, communication system 112, control system 114, setting generation system 116, local setting processing system 117 (which, itself, can include download component 119, local data access component 121, and other items 123), one or more controllable subsystems 118, operator interface system 120 (which, itself, can include one or more mobile devices 122, an in-cab mounted device 124, remotely accessible device 126, and/or other items 128), and data store 125, which can include indexed aggregated data 127 and other data 129. Agricultural vehicle 102 can also include a wide variety of other agricultural vehicle functionality 130.

Computing system 106, in the example shown in FIG. 1, includes data store 134 (which, itself, includes indexed, aggregated data 136 and other items 138), setting processing system 140, and other computing system functionality 142. Also, in the example shown in FIG. 1 setting processing system 140 includes data collection system 144, data sorting system 146, data aggregation system 148, data store interaction system 150, data serving system 151, and other setting processing functionality 152. Data sorting system 146 includes geographic sorting system 154, condition sorting system 156, outcome sorting system 157, and other items 158. Data aggregation system 148 includes metric generator 160, indexing system 162, and other items 164. Before describing the overall operation of agriculture system 100, a brief description of some of those items and their operation will first be provided.

Sensors 110 can sense a wide variety of different things on agricultural vehicle 102 and/or in the environment of agricultural vehicle 102. Some sensors 110 illustratively sense the value of different operator-controlled sensors, and sensors 110 may also sense the values of automatically controlled settings as well. Some examples of sensors 110 are described below with respect to subsequent Figures. Communication system 112 can be a communication system configured to communicate over network 108 with computing system 106 and also to communicate with other agricultural vehicles 104 and to facilitate communication among items on agricultural vehicle 102, or other remote systems. Therefore, depending on the type of network 108 and other communication systems in system 100, communication system 112 may be configured differently to perform such communication.

Control system 114 can be used to generate control signals to control controllable subsystems 118 based upon inputs from sensors 110 and communication system 112 and from local setting processing system 117, and based on operator inputs through operator interface 120. The control signals generated by system 114 may be indicative of setting values which are provided to setting generation system 116. System 116 generates outputs to establish or set the settings values on the various controllable subsystems 118. The controllable subsystems 118 may be a wide variety of controllable subsystems, depending upon the type of agricultural vehicle 102. Some examples of controllable subsystems 118 are described elsewhere.

Operator interface system 120 can be used to generate outputs for an operator of agricultural vehicle 102, or to receive inputs from the operator. Therefore, operator interface system 120 may include a mobile device 122 mounted in the operator compartment of agricultural vehicle 102 and connectable through operator interface system 120 to control system 114 or other items in agricultural vehicle 102. Operator interface system 120 can also include an in-cab mounted device 124 which may be a controller with a display that receives inputs such as touch inputs, point and click inputs, speech inputs, etc., and generates signals to other items in vehicle 102 based on those inputs. An in-cab mounted device 124 may also receive inputs from other items in vehicle 102 and provide outputs, such as audio, visual, and/or haptic outputs to the operator. Operator interface system 120 may also include a remotely accessible device 126 that can be accessed remotely from an operator or user of a remote system. In such a configuration, the remote operator or user may be able to view setting values on agricultural vehicle 102, generate settings values for agricultural vehicle 102, or interact remotely by with agricultural vehicle 102 in other ways.

Data collection system 144 collects settings data from agricultural vehicles 102-104. The settings data may be generated by sensors 110 that are sensing the values of the settings, or from setting generation system 116, itself, which is generating the setting values, or from control system 114, or in other ways. Data collection system 144 may also receive sorting (or indexing) criteria corresponding to the data and then provide the collected data to data sorting system 146. By way of example, Table 1 shows an example of the different types of settings value or other data that can be collected by data collection system 144 from the different agricultural vehicles 102-104.

**TABLE 1**

| **Planter Machine Setting Information** |
|---|
| Row Unit Applied Downforce, Row Unit Downforce Margin Setting, |
| Forward Travel Speed, Closing Wheel Pressure/Force, |
| Row Cleaner Setting (Pressure/Position), Seed Rate, |
| Vacuum Pressure, Seed Delivery Fan Pressure/Speed, |
| Motor RPMs, |
| Other |

| **Job Quality Numbers** |
|---|
| Acres Per Hour Efficiency, |
| Ride Quality As A Percent, |
| Singulation As A Percent, |
| Seed Spacing COV, |
| Other |

| **Agronomic Factor Data** |
|---|
| Soil Moisture, |
| Soil Temperature, |
| Soil CEC, |
| Other |

| **Data Streams** |
|---|
| Depth Measurement, |
| Soil Temperature, |
| Setting For various motors or Actuators (such as current or voltage or position of machine actuators). |

| **Tillage/Equipment Information** |
|---|
| Rolling Basket Pressure, |
| Tillage Depth, |
| Travel Speed |

| **Harvesting Equipment Information** |
|---|
| Blower/Fan Speed, |
| Concave Adjustment Setting, |
| Sieve and Chaffer Spacings and Speeds, |
| Forward Travel Speeds, |
| Crop Moisture, |
| Harvested Material Throughput. |

Data sorting system 146 then sorts the data based upon different indexing criteria. For example, geographic sorting system 154 sorts the data based upon the geographic location from which the setting data was obtained. Therefore, setting data that is collected from machines in a similar geographic area (such as in an area within a threshold radius, etc.) may be sorted together. In another example, condition sorting system 156 sorts the setting data based upon the conditions under which it was gathered (such as the field conditions, such as soil moisture, soil type, terrain, residue coverage, as well as machine operating conditions, such as speed, crop type, machine weight, etc.) so that settings data collected under similar conditions are sorted together. Outcome sorting system 157 sorts the setting data based on outcome. For example, the average planting population may be identified by system 157 for growers in the 90^{th} percentile in yield. In another example, the average tillage depth may be identified by system 157 for growers in the 90^{th} percentile for the smoothest planter ride quality. It will be noted that data sorting system 146 can sort the data in a plurality of different ways, based upon a plurality of different criteria as well. For instance, the settings data may be sorted based on a combination of geographic and condition criteria, and/or the settings data can be sorted into a plurality of different sorted data sets based on both geographic criteria and condition criteria independently of one another. It will be noted that geographic and condition criteria are only two examples of criteria, and other sorting or indexing criteria can be used to sort the data as well.

Data aggregation system 148 then aggregates the sorted data and uses data store interaction system 150 to store it as indexed, aggregated data 136. For instance, metric generator 160 can generate a metric value which corresponds to a settings value on agricultural vehicle 102 based upon the sorted, aggregated data. The metric may be the average of the settings value, a mean, or other value based upon the sorted, aggregated data. Thus, the output of metric generator 160 may be an average settings value used in a particular geographic location within a particular date range. The value may be an average settings value used under a certain set of operating conditions, or another settings value. Indexing system 162 then indexes the data. Data store interaction system 150 stores the indexed, aggregated data 136 in data store 134 for later access. It will be noted that data store 134 can include the raw data collected by data collection system 144, or other data as well. Download component 119 on vehicle 102 may continuously or intermittently download the indexed aggregated data (or any desired portion of the data) 136 and store the downloaded data as indexed aggregated data 127 in data store 125 on vehicle 102.

During operation of agricultural vehicles 102-104, in an example where the vehicle obtains data from setting processing system 140 on computing system 106, data serving system 151 in setting processing system 140 may expose an interface that can be accessed by communication system 112. Communication system 112 can then submit a request for settings data based on one or more different types of indexing criteria, such as settings data for a current geographic location, settings data for a current set of operating conditions, etc.

In an example in which the requested setting data is stored as data 127 in data store 125, communication system 112 may submit a request to local data access component 121.

Component 121 can then process the request to obtain the requested setting data from data store 125.

The request may be submitted on behalf of an operator through operator interface system 120, or the request may be generated automatically by control system 114, or in other ways. By way of example, operator interface system 120 may expose an interface to the operator that allows the operator to select settings for agricultural vehicle 102. The operator interface may be a wizard or another user experience that is orchestrated by operator interface system 120. In response, communication system 112 can submit the request to data serving system 151 through an exposed interface, or to local data access component 121, or in other ways. Data serving system 151 (or local data access component 121) can then access indexed, aggregated data 136 through data interaction system 150 (or indexed aggregated data 127) and return responsive data, that is responsive to the received request. Control system 114 can then control agricultural vehicle 102 based upon the returned data. For instance, control system 114 can pre-populate the settings values based upon the returned data, or display or otherwise present the returned data indicative of the settings values to the operator for selection, affirmation, or rejection. Control system 114 may provide the values to settings generation system 116 which automatically sets the settings values to control the controllable subsystems 118, or which pre-populates a wizard or other user interface where the operator may modify the values, or in other ways.

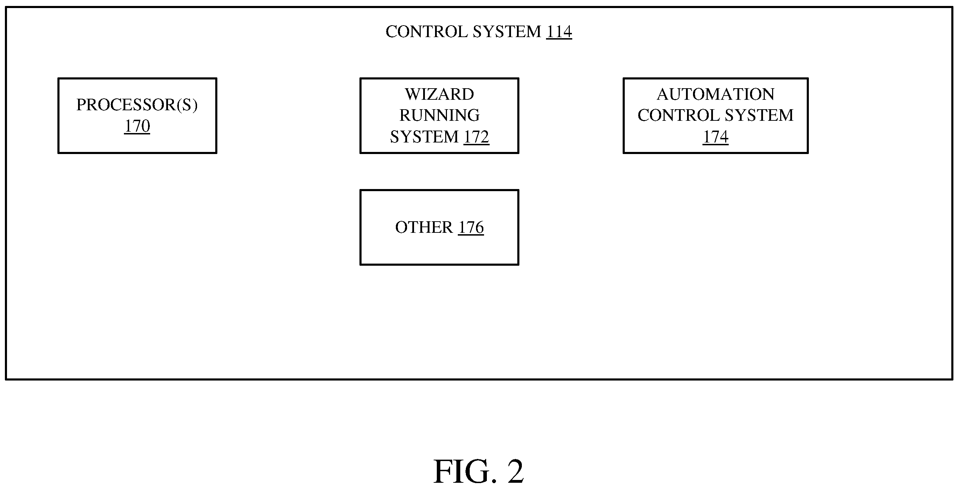

FIG. 2 is a block diagram showing one example of control system 114 in more detail. In the example shown in FIG. 2, control system 114 can include one or more processors 170, wizard running system 172, automation control system 174, and/or other items 176.

Wizard running system 172 is illustratively code or other functionality that runs a settings wizard on agricultural vehicle 102. The settings wizard may display a user interface that prompts the operator for settings values for different settings on the agricultural vehicle 102. The particular settings will of course vary based upon the type of vehicle 102 (such as whether vehicle 102 is a planter, a harvester, a tillage vehicle, etc.). In one example, the wizard running system 172 may present editable values that represent the settings values, in which the operator can edit those values by actuating the user interface (tapping up or down arrows, entering new alphanumeric values, actuating a drop down menu of setting values, or otherwise modifying the setting values). In one example, wizard running system 172 can pre-populate the setting values with information provided from setting processing system 140 or local setting processing system 117 in response to a request for settings data. For instance, on a harvester the sieve and chaffer clearance settings, header settings, speed settings, etc., may be pre-populated in setting value fields in a wizard based on average setting values for other harvesters in the same geographic region as vehicle 102. Those values can then be selected or changed by the operator of vehicle 102. This, of course, is just one example. In another example, wizard running system 172 displays the values received from setting processing system 140 or local setting processing system 117 so that the operator can view them, but does not pre-populate the setting value fields in the wizard. In that case, the user interface display on the wizard may provide functionality for allowing the operator to select the displayed value, to dismiss it, to modify it, etc.

Automation control system 174 may include code or other functionality that may automatically request and receive settings information from settings processing system 140 and automatically implement that settings information on agricultural vehicle 102. By way of example, where automation control system 174 automatically sets the setting values for the controllable subsystems 118, automation control system 174 may set initial settings values based upon the settings information received from setting processing system 140 or local setting processing system 117, and then vary those values using a control algorithm and sensor inputs from sensors 110, inputs from the operator, or based on other inputs. Also, as the conditions change or as the geographic location of vehicle 102 changes, automation control system 174 may generate new requests for new settings data from setting processing system 140 or local setting processing system 117 based upon the new conditions and/or the new geographic location of vehicle 102 and use the newly requested settings data for control of vehicle 102.

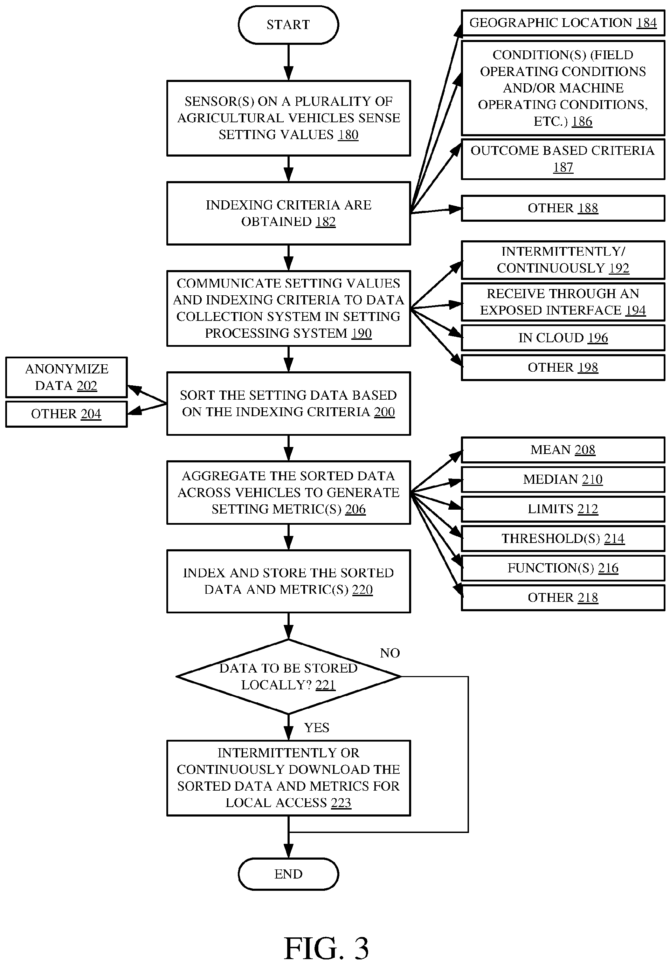

FIG. 3 is a flow diagram illustrating one example of the operation of agricultural system 100 in generating the indexed, aggregated data 136. The sensors 110 on each of the agricultural vehicles 102-104 sense setting values indicative of the settings that are currently being used on the corresponding agricultural vehicle. Having sensors 110 on a plurality of vehicles sensing the setting values on those vehicles is indicated by block 180 in the flow diagram of FIG. 3.

The indexing criteria corresponding to the setting values are also obtained based on sensor values of sensors 110 or through other information or functionality on vehicle 102. Obtaining the indexing criteria is indicated by block 182 in the flow diagram of FIG. 3. The indexing criteria can be the geographic location of agricultural vehicle 102, as indicated by block 184. The indexing criteria may be conditions (e.g., field conditions such as soil conditions, topology, residue, etc. or machine operating conditions such as crop type, speed, machine weight, etc.) the weather conditions, or other conditions under which agricultural vehicle 102 is operating, as indicated by block 186. The indexing criteria may include outcome based criteria 187. The indexing criteria may be a wide variety of other indexing criteria 188 as well. Communication system 112 communicates the data and indexing criteria to setting processing system 140 as indicated by block 190. The setting values and indexing criteria may be communicated to data collection system 144 together, or separately. Also, the data may be communicated from the agricultural vehicle 102 to setting processing system 140 intermittently or continuously as indicated by block 122. For instance, the data can be communicated periodically, intermittently when the data changes or based on other intermittent triggering criteria. The data collection system 144 may receive the information through an exposed interface as indicated by block 194. The information may be received through a cloud or other remote architecture, as indicated by block 196, or in other ways, as indicated by block 198.

The collected setting data received from a plurality of agricultural vehicles 102-104 is provided to data sorting system 146 which sorts the setting data based upon the indexing criteria, as indicated by block 200 in the flow diagram of FIG. 3. The data may also be anonymized so that the particular operator or machine owner that collected the data may be removed. The data may be anonymized in other ways as well, as indicated by block 202. Additional processing can be performed on the data as the data is sorted as well, as indicated by block 204.

Data aggregation system 148 then aggregates the sorted data, across the different vehicles from which the data was collected, to generate one or more setting metrics, as indicated by block 206. The setting metrics can be the mean 208, median 210, high and low limits 212, one or more threshold values 214, functions that are defined by or generated from the set of values, as indicated by block 216 or any of a wide variety of other setting metrics 218. Data aggregation system 148 then provides the data to data store interaction system 150 which indexes and stores the sorted data and/or the metrics as indicated by block 220. If the data is to be stored locally on one or more vehicles 102-104, as indicated by block 221, then the data is intermittently or continuously downloaded to the vehicles 102-104 for local access, as indicated by block 223.

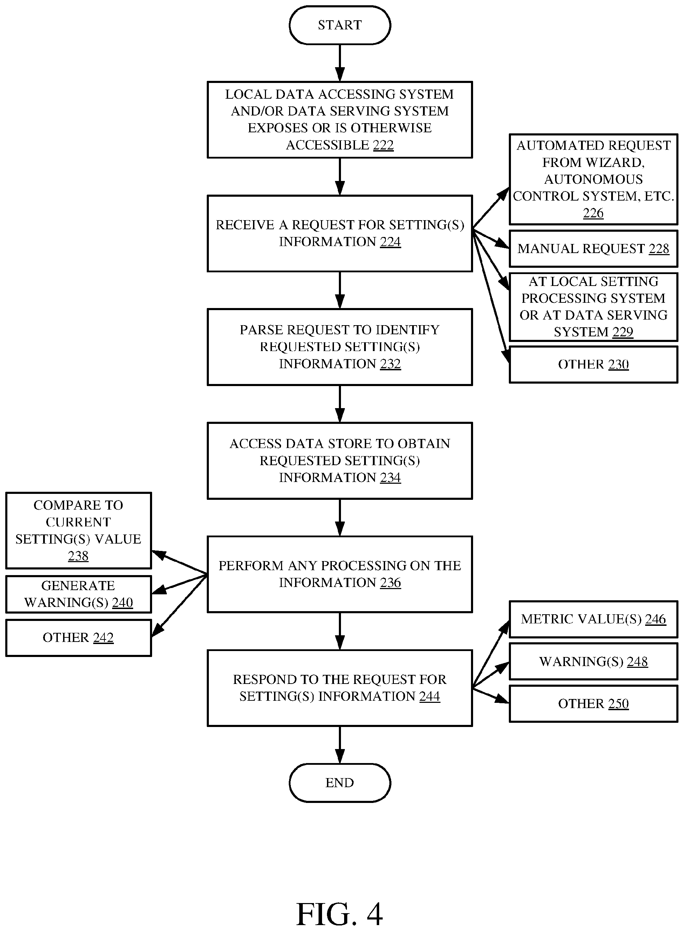

FIG. 4 is a flow diagram illustrating one example of the operation of setting processing system 140 (and/or local setting processing system 117) in serving data requested by an agricultural vehicle, or an operator of an agricultural vehicle, and/or another user. In one example, local setting processing system 117 and/or data serving system 151 expose an interface or is otherwise accessible by the agricultural vehicles, or other systems, as indicated by block 222. Data serving system 151 or local setting processing system 117 then receives a request for settings information, as indicated by block 224. The request may be an automated request from control system 114 (such as from a wizard being run by system 172, an automated request from automation control system 174, etc.) as indicated by block 226. The request may be a manual request input through operator interface system 120, as indicated by block 228. The request may be received by local data access component 121 or data serving system 151, as indicated by block 229. The request may be received in other ways as well, as indicated by block 230.

Data serving system 151 or local data access component 121 parses the request to identify the requested settings information, as indicated by block 232. For instance, the request may include a variety of information, some of which identifies the particular settings information requested (such as the type of vehicle from which the request originated, the particular settings that are being requested, the indexing criteria to use in responding to the request, etc.). That information may be parsed to identify the particular indexed, aggregated data 136 or 127 to return in response to the request. Data serving system 151 or local data access component 121 then uses data store interaction system 150 or other system to access data store 134 or 125 to obtain the requested settings information, as indicated by block 234.

Data serving system 151 or local data access component 121 can then perform any processing on the information prior to responding to the request, as indicated by block 236. For instance, the request may have included a current setting value and in that case, data serving system 151 or local data access component 121 can compare the current setting value to the settings value retrieved from data store 134 or 125, as indicated by block 238. Based on that comparison, or for other reasons, data serving system 151 or local data access component 121 may generate a warning that the current setting value is outside of a threshold indicated by the indexed, aggregated data 136 or 127, or that the current setting value deviates from the indexed, aggregated settings information by a predetermined amount, or for any of a wide variety of other reasons. Generating one or more warnings is indicated by block 240 in the flow diagram of FIG. 4. Data serving system 151 or local data access component 121 can perform any of a wide variety of other processing as well, as indicated by block 242.

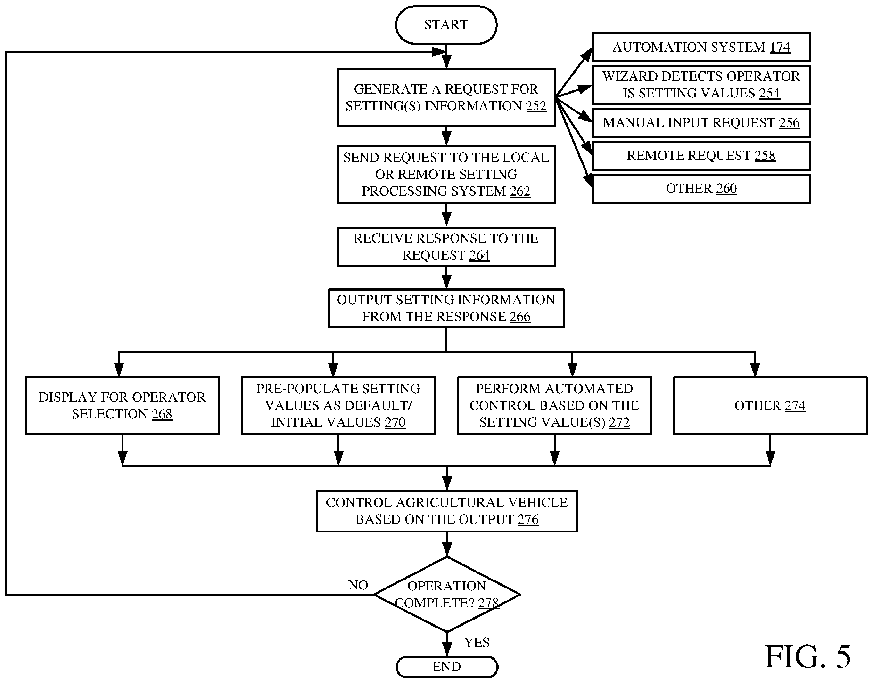

Data serving system 151 or local data access component 121 then responds to the request for the setting information, as indicated by block 244. The response may include one or more metric values in the indexed, aggregated data as indicated by block 246. The response may include any warnings 248 that were generated, or other information, as indicated by block 250. FIG. 5 is a flow diagram illustrating one example of the operation of control system 114 and/or other items on agricultural vehicle 102, in generating a request for information and receiving settings information, and then processing that information. Control system 114 first generates a request for the settings information, as indicated by block 252 in the flow diagram of FIG. 5. Again, the request can be generated from automation control system 174, or from wizard running system 172 detecting an operator input to set settings values, as indicated by block 254. The input can be through a manual request from operator interface system 120, as indicated by block 256, or a remote request from a remote user at a remote computing system, as indicated by block 258. The request can be generated in other ways as well, as indicated by block 260. Control system 114 then uses communication system 112 to send the request to the setting processing system 140 or local setting processing system 117, as indicated by 262 in the flow diagram of FIG. 5. The setting processing system 140 or 117 processes the request, and generates a response to the request.

Control system 114 then receives the response to the request from setting processing system 140 or 117, as indicated by block 264. Control system 114 can provide the information to setting generation system 116, operator interface system 120, or other items in agricultural vehicle 102 for use in controlling vehicle 102. Outputting the setting information from the response is indicated by block 266. For instance, operator interface system 120 can generate a display of the setting information on mobile device 122, on in-cab mounted device 124, or on a remotely accessible device 126. Displaying the setting information for operator interaction is indicated by block 268 in the flow diagram of FIG. 5.

Control system 114 can pre-populate setting values or automatically use them as default/initial values, as indicated by block 270. Automation control system 174 can perform automated control based on the setting values, as indicated by block 272. For instance, automation control system 174 can control setting generation system 116 to output setting values for controllable subsystems 118, automatically, based upon the setting values received from the setting processing system 140 or 117. The setting information can be processed and output in other ways as well, as indicated by block 274.

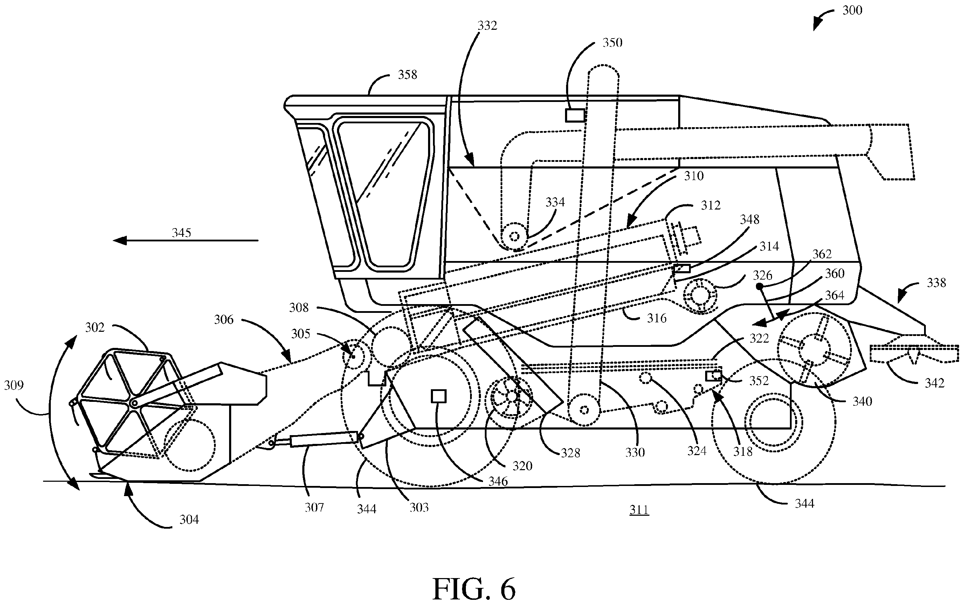

Control system 114 then controls the agricultural vehicle 102 based upon the output, as indicated by block 276. For example, the vehicle 102 can be automatically controlled using the setting information. The vehicle 102 can be controlled to display the setting information for operator selection. The vehicle can be controlled in other ways as well. Until the operation of vehicle 102 is complete, operation may continue at block 252, as indicated by block 278. FIG. 6 is a partial pictorial, partial schematic, illustration of one example of an agricultural vehicle which is a self-propelled agricultural harvesting machine 300, in an example where machine 300 is a combine harvester (or combine). It can be seen in FIG. 6 that combine 300 illustratively includes an operator compartment 301, which can have a variety of different operator interface mechanisms, for controlling combine 300. Combine 300 can include a set of front end equipment that can include header 302, and a cutter generally indicated at 304. It can also include a feeder house 306, a feed accelerator 308, and a thresher generally indicated at 310. Header 302 is pivotally coupled to a frame 303 of combine 300 along pivot axis 305. One or more actuators 307 drive movement of header 302 about axis 305 in the direction generally indicated by arrow 309. Thus, the vertical position of header 302 above ground 311 over which it is traveling can be controlled by actuating actuator 307. While not shown in FIG. 6, it may be that the tilt (or roll) angle of header 302 or portions of header 302 can be controlled by a separate actuator. Tilt, or roll, refers to the orientation of header 302 about the front-to-back longitudinal axis of combine 300.

Thresher 310 illustratively includes a threshing rotor 312 and a set of concaves 314. Further, combine 300 can include a separator 316 that includes a separator rotor. Combine 300 can include a cleaning subsystem (or cleaning shoe) 318 that, itself, can include a cleaning fan 320, chaffer 322 and sieve 324. The material handling subsystem in combine 300 can include (in addition to a feeder house 306 and feed accelerator 308) discharge beater 326, tailings elevator 328, clean grain elevator 330 (that moves clean grain into clean grain tank 332) as well as unloading auger 334 and spout 336. Combine 300 can further include a residue subsystem 338 that can include chopper 340 and spreader 342. Combine 300 can also have a propulsion subsystem that includes an engine that drives ground engaging wheels 344 or tracks, etc. It will be noted that combine 300 may also have more than one of any of the subsystems mentioned above (such as left and right cleaning shoes, separators, etc.).

In operation, and by way of overview, combine 300 illustratively moves through a field in the direction indicated by arrow 346. As it moves, header 302 engages the crop to be harvested and gathers it toward cutter 304. The operator illustratively sets a height setting for header 302 (and possibly a tilt or roll angle setting) and a control system (such as control system 114) controls actuator 307 (and possibly a tilt or roll actuator - not shown) to maintain header 302 at the set height above ground 311 (and at the desired roll angle). The control system responds to header error (e.g., the difference between the set height and measured height of header 104 above ground 311 and possibly roll angle error) with a responsiveness that is determined based on a set sensitivity level. If the sensitivity level is set high, the control system responds to, smaller header position errors, and attempts to reduce them more quickly than if the sensitivity is set lower.

After the crop is cut by cutter 304, it is moved through a conveyor in feeder house 306 toward feed accelerator 308, which accelerates the crop into thresher 310. The crop is threshed by rotor 312 rotating the crop against concaves 314. The threshed crop is moved by a separator rotor in separator 316 where some of the residue is moved by discharge beater 326 toward the residue subsystem 338. It can be chopped by residue chopper 340 and spread on the field by spreader 342. In other configurations, the residue is simply chopped and dropped in a windrow, instead of being chopped and spread.

Grain falls to cleaning shoe (or cleaning subsystem) 318. Chaffer 322 separates some of the larger material from the grain, and sieve 324 separates some of the finer material from the clean grain. Clean grain falls to an auger in clean grain elevator 330, which moves the clean grain upward and deposits it in clean grain tank 332. Residue can be removed from the cleaning shoe 318 by airflow generated by cleaning fan 320. Cleaning fan 320 directs air along an airflow path upwardly through the sieves and chaffers and the airflow carries residue can also be rearwardly in combine 300 toward the residue handling subsystem 338.

Tailings can be moved by tailings elevator 328 back to thresher 310 where they can be re-threshed. Alternatively, the tailings can also be passed to a separate re-threshing mechanism (also using a tailings elevator or another transport mechanism) where they can be re-threshed as well.

FIG. 6 also shows that, in one example, combine 300 can include ground speed sensor 347, one or more separator loss sensors 348, a clean grain camera 350, and one or more cleaning shoe loss sensors 352. Ground speed sensor 346 illustratively senses the travel speed of combine 300 over the ground. This can be done by sensing the speed of rotation of the wheels, the drive shaft, the axel, or other components. The travel speed can also be sensed by a positioning system, such as a global positioning system (GPS), a dead reckoning system, a LORAN system, or a wide variety of other systems or sensors that provide an indication of travel speed.

Cleaning shoe loss sensors 352 illustratively provide an output signal indicative of the quantity of grain loss by both the right and left sides of the cleaning shoe 318. In one example, sensors 352 are impact sensors which count grain strikes per unit of time (or per unit of distance traveled) to provide an indication of the cleaning shoe grain loss. The impact sensors for the right and left sides of the cleaning shoe can provide individual signals, or a combined or aggregated signal. It will be noted that sensors 352 can comprise only a single sensor as well, instead of separate sensors for each shoe.

Separator loss sensor 348 provides a signal indicative of grain loss in the left and right separators. The sensors associated with the left and right separators can provide separate grain loss signals or a combined or aggregate signal. This can be done using a wide variety of different types of sensors as well. It will be noted that separator loss sensors 348 may also comprise only a single sensor, instead of separate left and right sensors.

It will also be appreciated that sensor(s) 110 and measurement mechanisms (in addition to the sensors already described) can include other sensors on combine 300 as well. For instance, the sensors 110 can include a header height sensor that senses a height of header 302 above ground 311. Sensors 110 can include stability sensors that sense oscillation or bouncing motion (and amplitude) of combine 300. Sensors 110 can include a residue setting sensor that is configured to sense whether machine 300 is configured to chop the residue, drop a windrow, etc. The sensors 110 can include cleaning shoe fan speed sensors that can be configured proximate fan 320 to sense the speed of the fan. The sensors 110 can include a threshing clearance sensor that senses clearance between the rotor 312 and concaves 314. The sensors 110 include a threshing rotor speed sensor that senses a rotor speed of rotor 312. The sensors 110 can include a chaffer clearance sensor that senses the size of openings in chaffer 322. The sensors 110 can include a sieve clearance sensor that senses the size of openings in sieve 324. The sensors 110 can include a material other than grain (MOG) moisture sensor that can be configured to sense the moisture level of the material other than grain that is passing through combine 300. The sensors 110 can include machine setting sensors that are configured to sense the various configurable settings on combine 300. The sensors 110 can also include a machine orientation sensor that can be any of a wide variety of different types of sensors that sense the orientation of combine 300. Crop property sensors can sense a variety of different types of crop properties, such as crop type, crop size (e.g., stalk width), crop moisture, and other crop properties. The crop property sensors can also be configured to sense characteristics of the crop as they are being processed by combine 300. For instance, the crop property sensors can sense grain feed rate (e.g., mass flow rate), as it travels through clean grain elevator 330, or provide other output signals indicative of other sensed variables. Environment sensors can sense soil moisture, soil compaction, weather (which may be sensed or downloaded), temperature, standing water, and other properties of the soil, crop, machine or environment. Some additional examples of the types of sensors that can be used are described below.

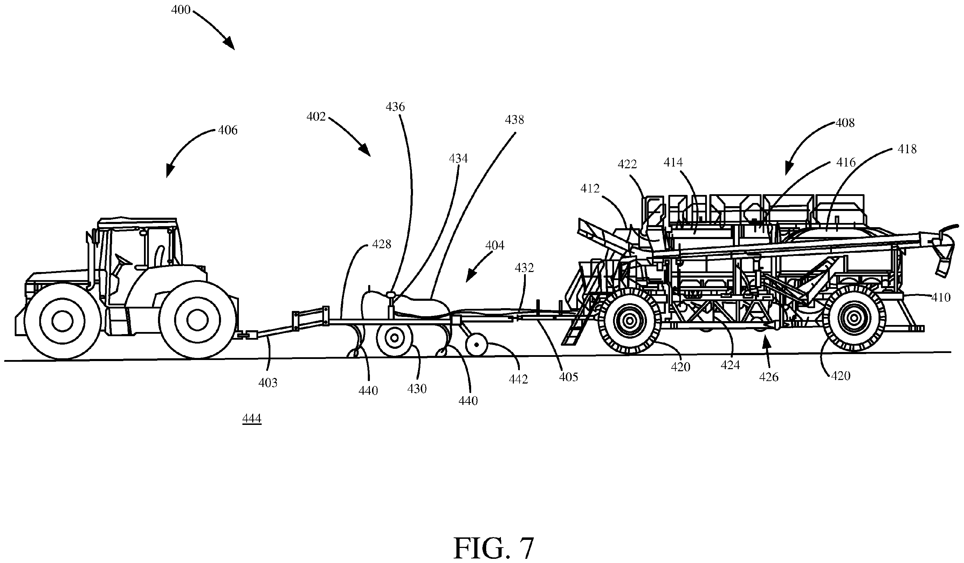

FIG. 7 is a side view of an example of an agricultural system 100 in which the agricultural vehicle 102 includes an agricultural implement, in particular an air or pneumatic seeder 402. In the example shown in FIG. 7, the seeder 402 comprises a tilling implement (or seeding tool) 404 (also sometimes called a drill) towed between a tractor (or other towing vehicle) 406 and a commodity cart (also sometimes called an air cart) 408. The commodity cart 408 has a frame 410 upon which a series of product tanks 412, 414, 416, and 418, and wheels 420 are mounted. Each product tank has a door (a representative door 422 is labeled) releasably sealing an opening at its upper end for filling the tank with product, most usually a commodity of one type or another. A metering system 424 is provided at a lower end of each tank (a representative one of which is labeled) for controlled feeding or draining of product (most typically granular material) into a pneumatic distribution system 426. The tanks 412, 414, 416, and 418 can hold, for example, a material or commodity such as seed or fertilizer to be distributed to the soil. The tanks can be hoppers, bins, boxes, containers, etc. The term "tank" shall be broadly construed herein. Furthermore, one tank with multiple compartments can also be provided instead of separated tanks.

The tilling implement or seeding tool 404 includes a frame 428 supported by ground wheels 430. Frame 428 is connected to a leading portion of the commodity cart 408, for example by a tongue style attachment (not labeled). The commodity cart 408 as shown is sometimes called a "tow behind cart," meaning that the cart 408 follows the tilling implement 404. In an alternative arrangement, the cart 408 can be configured as a "tow between cart," meaning the cart 408 is between the tractor 406 and tilling implement 404. In yet a further possible arrangement, the commodity cart 408 and tilling implement 404 can be combined to form a unified rather than separated configuration. These are just examples of additional possible configurations. Other configurations are even possible and all configurations should be considered contemplated and within the scope of the present description.

In the example shown in FIG. 7, tractor 406 is coupled by couplings 403 to seeding tool 404 which is coupled by couplings 405 to commodity cart 408. The couplings 403 and 405 can be mechanical, hydraulic, pneumatic, and electrical couplings and/or other couplings. The couplings 403 and 405 can include wired and wireless couplings as well.

The pneumatic distribution system 426 includes a fan (not shown) connected to a product delivery conduit structure having multiple product flow passages 432. The fan directs air through the flow passages 432. Each product metering system 424 controls delivery of product from its associated tank at a controllable rate to the transporting airstreams moving through flow passages 432. In this manner, each flow passage 432 carries product from the tanks to a secondary distribution tower 434 on the tilling implement 404. Typically, there will be one tower 434 for each flow passage 432. Each tower 434 includes a secondary distributing manifold 436, typically located at the top of a vertical tube. The distributing manifold 436 divides the flow of product into a number of secondary distribution lines 438. Each secondary distribution line 438 delivers product to one of a plurality of ground engaging tools 440 (also known as ground openers) that define the locations of work points on seeding tool 404. The ground engaging tools 440 open a furrow in the soil 444 and facilitates deposit of the product therein. The number of flow passages 432 that feed into secondary distribution may vary from one to eight or ten or more, depending at least upon the configuration of the commodity cart 408 and tilling implement 404. Depending upon the cart and implement, there may be two distribution manifolds 436 in the air stream between the meters 424 and the ground engaging tools 440. Alternatively, in some configurations, the product is metered directly from the tank or tanks into secondary distribution lines that lead to the ground engaging tools 440 without any need for an intermediate distribution manifold. The product metering system 424 can be configured to vary the rate of delivery of seed to each work point on tool 404 or to different sets or zones of work points on tool 404. The configurations described herein are only examples. Other configurations are possible and should be considered contemplated and within the scope of the present description.

A firming or closing wheel 442 associated with each ground engaging tool 140 trails the tool and firms the soil over the product deposited in the soil. In practice, a variety of different types of tools 440 are used including, but not necessarily limited to, tines, shanks and disks. The tools 440 are typically moveable between a lowered position engaging the ground and a raised position riding above the ground. Each individual tool 440 may be configured to be raised by a separate actuator. Alternatively, multiple tools 440 may be mounted to a common component for movement together. In yet another alternative, the tools 440 may be fixed to the frame 428, the frame being configured to be raised and lowered with the tools 440.

Examples of air or pneumatic seeder 402 described above should not be considered limiting. The features described in the present description can be applied to any seeder configuration, or other material application machine, whether specifically described herein or not. Settings can be used to set pneumatic pressure, travel speed, down force, seeding rate, material application rate, among others.

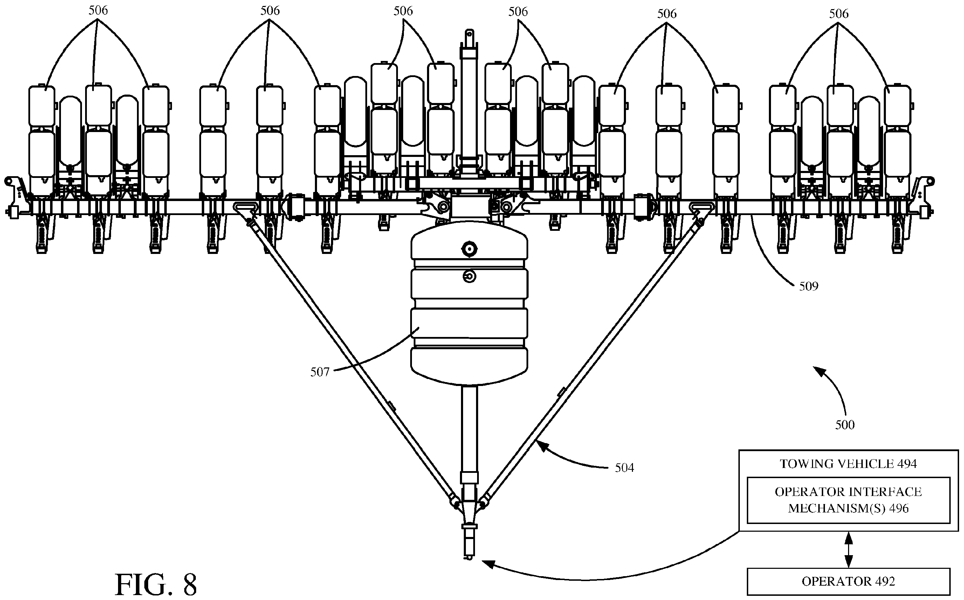

FIG. 8 is a partial pictorial, partial schematic top view of one example of an architecture vehicle 102 that includes agricultural planting machine 500, and towing vehicle 494, that is operated by operator 492. Operator 492 can illustratively interact with operator interface mechanisms 496 to manipulate and control vehicle 494, and some or all portions of machine 500.

Machine 500 is a row crop planting machine that illustratively includes a toolbar 502 that is part of a frame 504. FIG. 8 also shows that a plurality of planting row units 506 are mounted to the toolbar 502. Machine 500 can be towed behind towing vehicle 494, such as a tractor.

FIG. 8 shows that material can be stored in a tank 507 and pumped through a supply line so the material can be dispensed by row units 506 in or near the rows being planted.

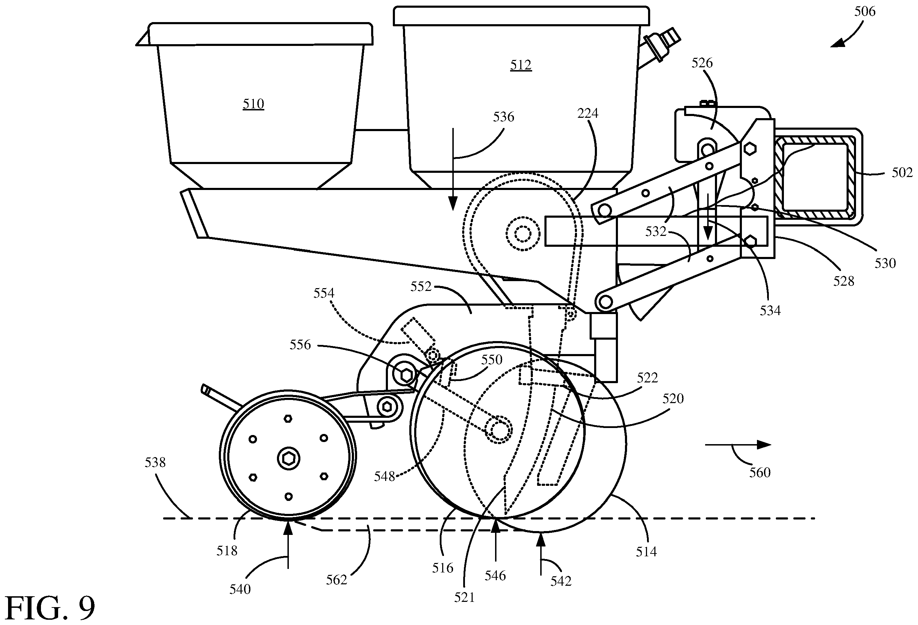

FIG. 9 is a side view of one example of a row unit 506. Row unit 506 illustratively includes a chemical tank (also referred to herein as a commodity tank) 510 and a seed storage tank 512.

It also illustratively includes one or more disc openers 514, a set of gauge wheels 516, and a set of closing wheels 518. Seeds from tank 512 are fed into a seed meter 524. The seed meter 524 (which is shown in more detail below) controls the rate at which seeds are dropped into a seed tube 520 or other seed delivery system, such as a brush belt or flighted belt, from seed storage tank 512. The seeds can be sensed by a seed sensor 522.

Some parts of row unit 506 will now be discussed in more detail. First, it will be noted that there are different types of seed meters 524, and the one that is shown is shown for the sake of example only and is described in greater detail below. However, in one example, each row unit 506 need not have its own seed meter. Instead, metering or other singulation or seed dividing techniques can be performed at a central location, for groups of row units 506. The metering systems can include finger pick-up meters and/or vacuum meters (e.g., having rotatable discs, rotatable concave or bowl-shaped devices), among others. The seed delivery system can be a gravity drop system (such as seed tube 520 shown in FIG. 9) in which seeds are dropped through the seed tube 520 and fall (via gravitational force) through the seed tube and out the outlet end 521 into the seed trench 562. Other types of seed delivery systems may include assistive systems, in that they do not simply rely on gravity to move the seed from the metering system into the ground. Instead, such assistive systems actively assist the seeds in moving from the meter to a lower opening, where they exit or are deposited into the ground or trench. These can be systems that physically capture the seed and move it from the meter to the outlet end of the seed delivery system or they can be pneumatic systems that pump air through the seed tube to assist movement of the seed. The air velocity can be controlled to control the speed at which the seed moves through the delivery system.

A downforce actuator 526 is mounted on a coupling assembly 528 that couples row unit 506 to toolbar 502. Actuator 526 can be a hydraulic actuator, a pneumatic actuator, a spring-based mechanical actuator or a wide variety of other actuators. In the example shown in FIG. 9, a rod 530 is coupled to a parallel linkage 532 and is used to exert an additional downforce (in the direction indicated by arrow 534) on row unit 506. The total downforce (which includes the force indicated by arrow 534 exerted by actuator 536, plus the force due to gravity acting on row unit 506, and indicated by arrow 536) is offset by upwardly directed forces acting on closing wheels 518 (from ground 538 and indicated by arrow 540) and disc opener 514 (again from ground 538 and indicated by arrow 542). The remaining force (the sum of the force vectors indicated by arrows 534 and 536, minus the force indicated by arrows 540 and 542) and the force on any other ground engaging component on the row unit (not shown), is the differential force indicated by arrow 546. The differential force may also be referred to herein as the downforce margin. The force indicated by arrow 546 acts on the gauge wheels 516. This load can be sensed by a gauge wheel load sensor, which may be located anywhere on row unit 506 where it can sense that load. The gauge wheel load sensor can also be placed where it may not sense the load directly, but a characteristic indicative of that load. For example, it can be disposed near a set of gauge wheel control arms (or gauge wheel arm) 548 that movably mount gauge wheels 516 to shank 552 and control an offset between gauge wheels 516 and the discs in double disc opener 514, to control planting depth.

Arms (or gauge wheel arms) 548 illustratively abut against a mechanical stop (or arm contact member-or wedge) 550. The position of mechanical stop 550 relative to shank 552 can be set by a planting depth actuator assembly 554. Control arms 548 illustratively pivot around pivot point 556 so that, as planting depth actuator assembly 554 actuates to change the position of mechanical stop 550, the relative position of gauge wheels 516, relative to the double disc opener 514, changes, to change the depth at which seeds are planted.

In operation, row unit 506 travels generally in the direction indicated by arrow 560. The double disc opener 514 opens a furrow 562 in the soil 538, and the depth of the furrow 562 is set by planting depth actuator assembly 554, which, itself, controls the offset between the lowest parts of gauge wheels 516 and disc opener 514. Seeds are dropped through seed tube 520, into the furrow 562 and closing wheels 518 close the furrow 562 (e.g., push soil back into the furrow 562).

As the seeds are dropped through seed tube 520, they can be sensed by seed sensor 522. Some examples of seed sensor 522 are described in greater detail below. Briefly, some examples of seed sensor 522 may include an optical or reflective sensor, which includes a radiation transmitter component and a receiver component. The transmitter component emits electromagnetic radiation and the receiver component then detects the radiation and generates a signal indicative of the presence or absence of a seed adjacent the sensors. In another example, row unit 506 may be provided with a seed firmer that is positioned to travel through the furrow 562, after seeds are placed in furrow 562, to firm the seeds in place. A seed sensor can be placed on the seed firmer and generate a sensor signal indicative of a seed. Again, some examples of seed sensors are described in greater detail below.

In the example shown in FIG. 9, where a seed tube 520 is used, the rotation of seed meter 524 can be pulsed so that it is increased to quickly drop a grouping or cluster of seeds into seed tube 520 so that they will exit the outlet end 521 of seed tube 520 in close proximity to one another. The rotation of seed meter 524 can then be slowed down so that the next cluster or grouping of seeds is spaced from the former cluster or grouping of seeds that was just dropped. This is described in more detail below.

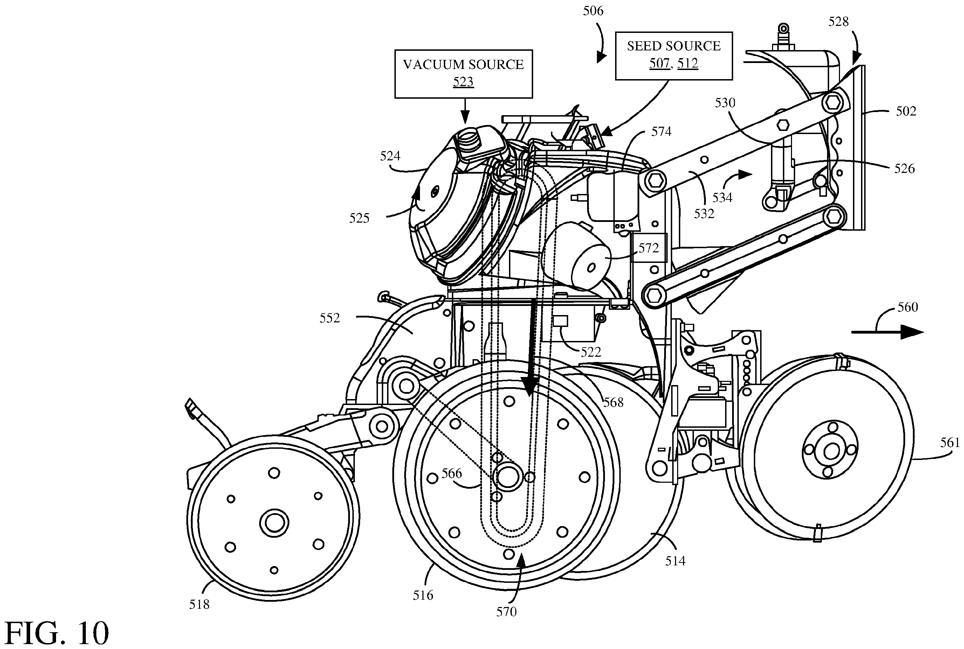

FIG. 10 shows another example of a row unit 506. Some items are similar to those shown in FIG. 9, and they are similarly numbered. FIG. 10 shows that row unit 506 can also include a row cleaner 561 which can remove debris, clumps, residue, etc. from the portion of the surface where opener 514 will open the furrow. Also, FIG. 10 shows that seeds can be provided to meter 524 from a seed source which may be seed tank 512, tank 507 (shown in FIG. 8) or from another seed source.

Also, instead of the seed delivery system being a seed tube 520 as shown in FIG. 9, which relies on gravity to move the seed to the furrow 562, the seed delivery system shown in FIG. 10 is an assistive seed delivery system 566. Assistive seed delivery system 566 also illustratively has a seed sensor 522 disposed therein. Assistive seed delivery system 566 includes a continuous member that captures the seeds as they leave seed meter 524 and moves them in the direction indicated by arrow 568 toward furrow 562. System 566 has an outlet end 570 where the seeds exit assistive system 566, into furrow 562, where they again reach their final resting location. FIG. 10 shows a meter motor 572 that drives rotation of meter 524 and a delivery system motor 574 that drives rotation of assistive delivery system 566. In one example, motors 572 and 574 can be individually controlled. In another example, they are controlled in coordination with one another. In yet another example, meter 524 and assistive seed delivery system 566 are both driven by a single motor. In one example, a vacuum source 523 pulls a vacuum in meter 524, as is described in more detail elsewhere, to aid in seed metering.

In one example, the seed simply drops from exit end 570 into furrow 562 under the force of gravity. In another example, however, the seed can be ejected from delivery system 566 at a greater or lesser speed than that which would be reached under the force of gravity. Similarly, it may be that the seed drops straight downward into furrow 562 from the outlet end 570. In another example, however, it may be that the seed is propelled slightly rearwardly from the outlet end 570, to accommodate for the forward motion of the row unit 106, so that the travel path of the seed is more vertical and so the seed rolls less once it reaches the furrow. Further, the seed can be ejected rearwardly and trapped against the ground by a trailing member (such as a pinch wheel) which functions to stop any rearward movement of the seed, after ejection, and to force the seed into firm engagement with the ground.

In one example, motor 572, which drives seed meter 524, can be pulsed to place seeds closely adjacent one another into the assistive delivery system 566. Assistive delivery system 566 then moves the cluster of seeds (closely spaced seeds) to the outlet end 570 where it deposits them in closely spaced relation to one another, in the furrow 562. For instance, it may be that motor 572 pulses the rotation of seed meter 524 so that three seeds are spaced closely proximate one another in seed delivery system 566, and will thus be deposited in close proximity to one another in the furrow. Between pulses, motor 572 can slow or stop the rotation of seed meter 524 so that the clusters of seeds (or groupings of seeds) are spaced from one another. In this way, row unit 506 plants clusters or groupings of seeds that are closely spaced relative to one another by an intra-group seed spacing and where the clusters or groups are spaced from other groups or clusters of seeds by a group spacing (or group separation distance) where the intra-group seed spacing is smaller than the group spacing (or group separation distance). In this example, motor 574 may drive rotation of assistive delivery system 566 so that it is at a relatively constant speed. Thus, the pulsed rotation of seed meter 524 is what forms the clusters or groupings of seeds which are deposited by seed delivery system 566 in spaced clusters or groups in the furrow.

In another example, it may be that motor 572 drives rotation of meter 524 at a constant speed and motor 574 pulses the rotation of assistive delivery 566 so that, the pulsed operation of assistive delivery system 566 acts to cluster the seeds closely relative to one another in groups or clusters. In such a scenario, motor 574 can increase the rotational speed of system 566 so that three seeds, for example, are deposited closely proximate one another in the furrow, and then slow the rotation of assistive delivery system 566 so that the next cluster is deposited in a position that is desirably spaced from the former cluster.

In yet another example, motors 572 and 574 can act in coordination with one another so that seeds are deposited in spaced clusters or groupings in the furrow.

It can thus be seen that the present description describes a system in which settings information can be obtained and used in controlling an agricultural vehicle. The settings information may be settings values obtained and aggregated from a plurality of different agricultural vehicles in a similar geographic area, under similar conditions, etc. The settings information can then be used to control the agricultural vehicle.

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, the mechanisms can be actuated using touch gestures. Also, where the device that displays them has speech recognition components, the mechanisms can be actuated using speech commands.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components and/or logic. It will be appreciated that such systems, components and/or logic can be comprised of hardware items (such as processors and associated memory, or other processing components, some of which are described below) that perform the functions associated with those systems, components and/or logic. In addition, the systems, components and/or logic can be comprised of software that is loaded into a memory and is subsequently executed by a processor or server, or other computing component, as described below. The systems, components and/or logic can also be comprised of different combinations of hardware, software, firmware, etc., some examples of which are described below. These are only some examples of different structures that can be used to form the systems, components and/or logic described above. Other structures can be used as well.

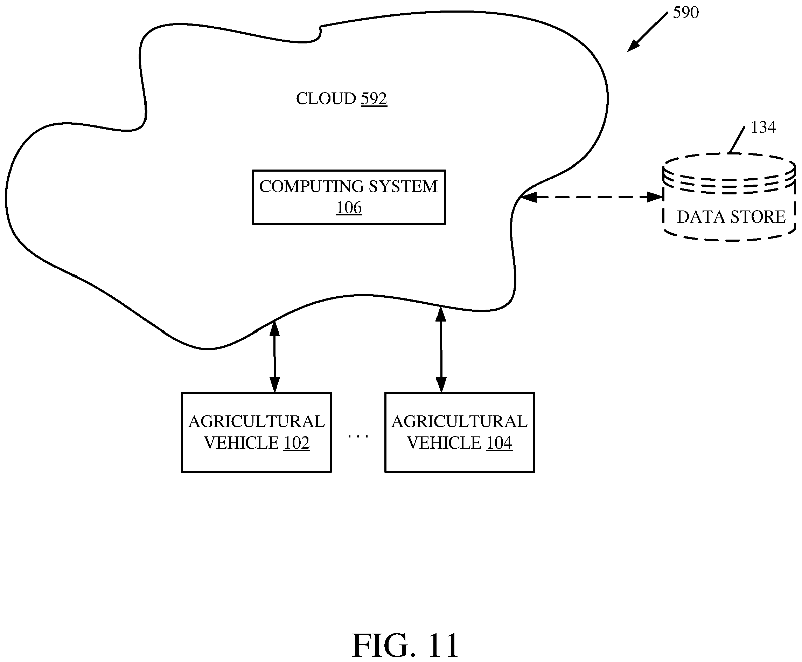

FIG. 11 is a block diagram of agricultural system 100, shown in FIG. 1, except that it is disposed in a remote server architecture 590. In an example, remote server architecture 590 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in other FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and/or functionality can be provided from a conventional server, or they can be installed on client devices directly, or in other ways.

In the example shown in FIG. 11, some items are similar to those shown in previous FIGS. and they are similarly numbered. FIG. 11 specifically shows that computing system 106, and vehicles 102-104.can be located at a remote server location 592. Therefore, agricultural system 100 accesses those systems through remote server location 592.

FIG. 11 also depicts another example of a remote server architecture. FIG. 11 shows that it is also contemplated that some elements of previous FIGS are disposed at remote server location 592 while others are not. By way of example, data store 134 can be disposed at a location separate from location 502, and accessed through the remote server at location 502. Regardless of where the items are located, the items can be accessed directly by vehicle 102-104, through a network (either a wide area network or a local area network), vehicles 102-104 can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection/download system. As the vehicles 102-104 comes close to the fuel truck for fueling, the system automatically collects the information from the vehicles 102-104 and/or downloads information to vehicle 102-104 using any type of ad-hoc wireless connection. The collected information can then be forwarded to the main network (and new information for download can be obtained from the main network) as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the agricultural vehicles 102-104 until the vehicles enter a covered location. The vehicle 102-104, themselves, can then send/download the information to/from the main network.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

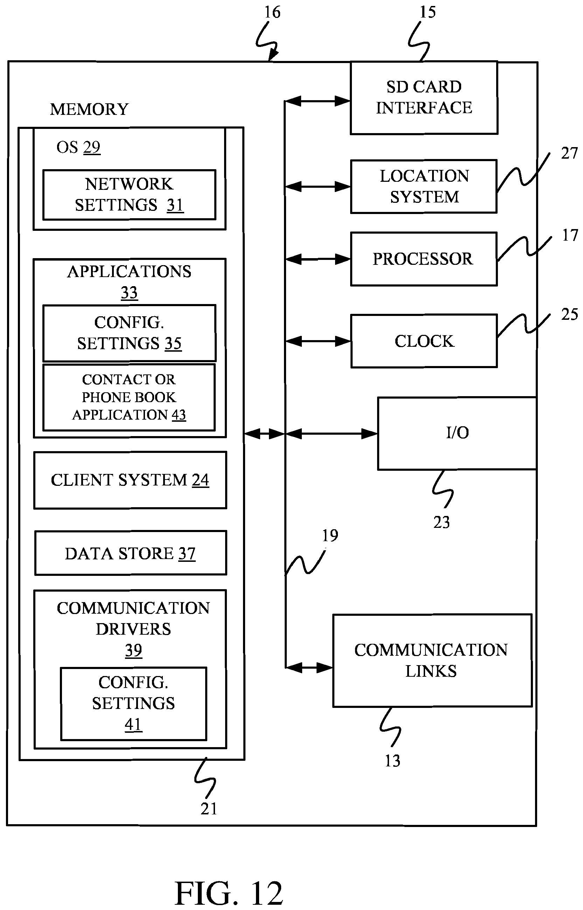

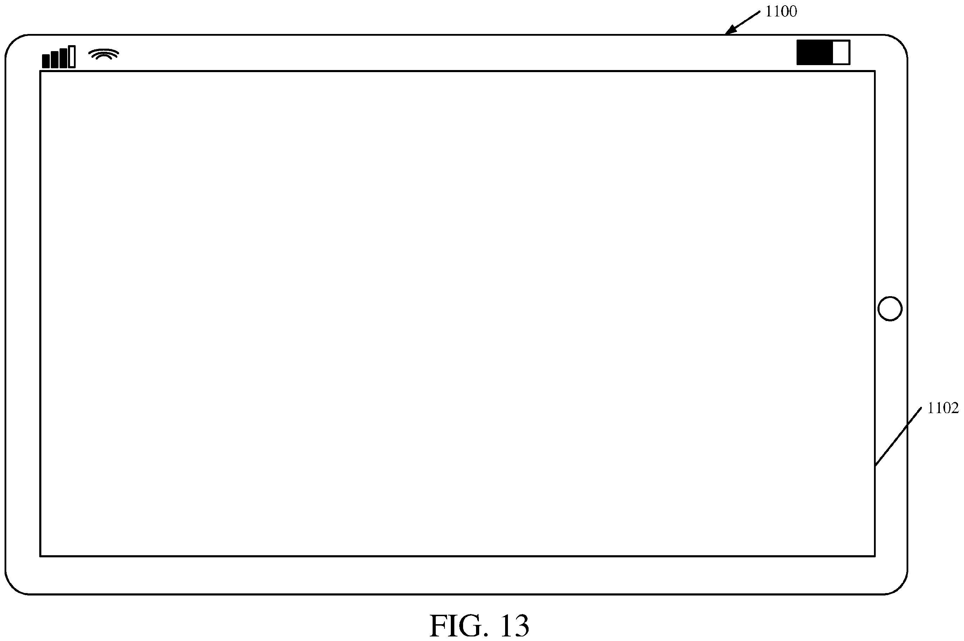

FIG. 12 is a simplified block diagram of one illustrative example of a handheld or mobile computing device that can be used as a user's or client's hand held device 16, in which the present system (or parts of it) can be deployed. For instance, a mobile device can be deployed in the operator compartment of agricultural vehicles 102-104 for use in generating, processing, or displaying the data. FIGS. 13-14 are examples of handheld or mobile devices.

FIG. 12 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and nonvolatile computer-readable memory devices. It can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 13 shows one example in which device 16 is a tablet computer 600. In FIG. 13, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

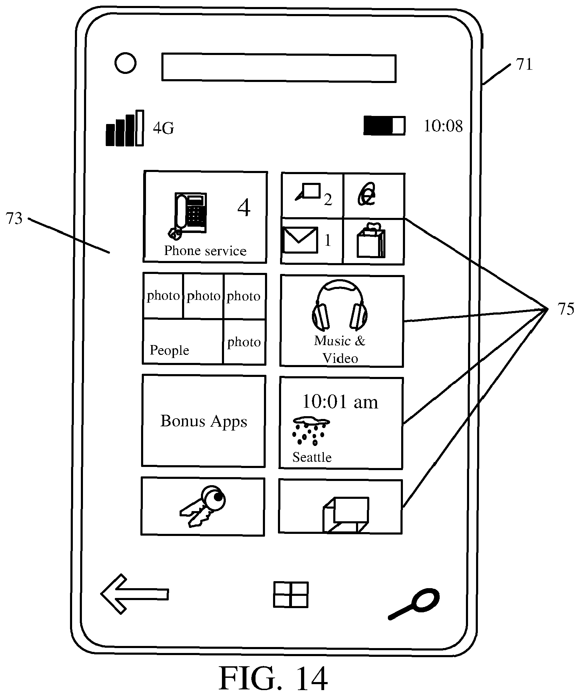

FIG. 14 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

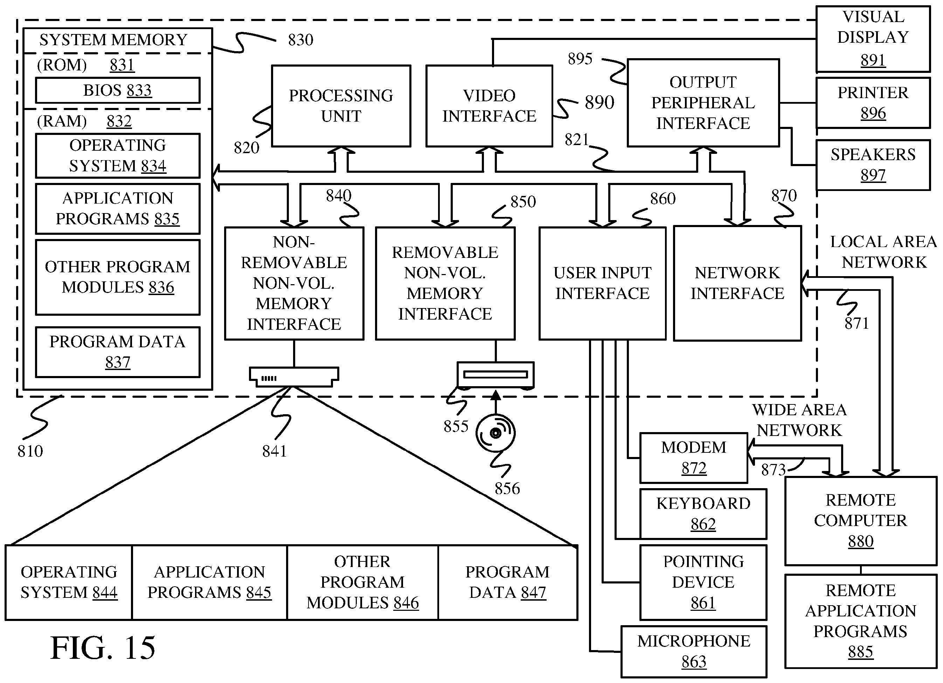

FIG. 15 is one example of a computing environment in which elements of previous FIGS., or parts of it, (for example) can be deployed. With reference to FIG. 15, an example system for implementing some embodiments includes a general-purpose computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 15.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 15 illustrates operating system 834, application programs 835, other program modules 836, and program data 837.

The computer 810 may also include other removable/non-removable volatile/nonvolatile computer storage media. By way of example only, FIG. 15 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 15, provide storage of computer readable instructions, data structures, program modules and other data for the computer 810. In FIG. 15, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 15 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer implemented method of controlling an agricultural vehicle, comprising:
detecting (182) a sorting criterion value on the agricultural vehicle;
obtaining (264) settings information based on the sorting criterion, the settings information being indicative of an aggregated setting value aggregated from a plurality of different agricultural vehicles with a corresponding sorting criterion; and
controlling (276) the agricultural vehicle based on the settings information in the response.

2. The computer implemented method of claim 1 wherein obtaining settings information comprises:
generating (252) a request for settings information, the request being indicative of the sorting criterion;
sending (262) the request for settings information to a setting processing system; and
receiving (264) a response to the request for settings information, the response including the settings information.

3. The computer implemented method of claim 1 or 2, wherein controlling the agricultural vehicle comprises:
automatically setting (272) a settings value for a controllable subsystem (118) on the agricultural vehicle based on the aggregated setting value.

4. The computer implemented method of one of the claims 1 to 3, wherein controlling the agricultural vehicle comprises:
controlling (268) an operator interface system on the agricultural vehicle to generate an operator-observable output indicative of the aggregated setting value.

5. The computer implemented method of one of the claims 1 to 4, wherein controlling the operator interface system comprises:
pre-populating (270) a settings input interface display with the aggregated setting value;
detecting (268) an operator input interacting with the user interface display; and
controlling (276) the agricultural vehicle based on the user interaction

6. The computer implemented method of claim 5, wherein detecting the operator input comprises:
detecting (276) an operator input modifying the pre-populated aggregated setting value on the settings input interface display to obtain a modified setting value and wherein controlling the agricultural vehicle comprises controlling the agricultural vehicle based on the modified setting value.

7. The computer implemented method of claim 5 or 6, wherein detecting the operator input comprises:
detecting (276) an operator input selecting the pre-populated aggregated setting value on the settings input interface display to obtain a selected setting value and wherein controlling the agricultural vehicle comprises controlling the agricultural vehicle based on the selected setting value.

8. The computer implemented method of one of the claims 5 to 7, wherein pre-populating a settings input interface display with the aggregated setting value, comprises:
controlling (254) an operator interface system to run a settings wizard to display the settings input interface display and pre-populating a settings input interface display in the wizard with the aggregated setting value.

9. The computer implemented method of one of the claims 1 to 8, further comprising:
detecting (180) a setting value for a plurality of different settings on the agricultural vehicle; and
sending (190) the detected setting value for the plurality of different settings to the setting processing system.

10. An agricultural vehicle (102), controllable by a computer implemented method according to one of the claims 1 to 9, comprising:
a setting generation system (116);
a local setting processing system (117);
a controllable subsystem (118);
an operator interface system (120);
a data store (125), including indexed aggregated data (127);
one or more sensors (110), detecting a sorting criterion value on the agricultural vehicle (102);
a control system (114); generating a request for settings information, the request being indicative of the sorting criterion; and
a communication system (112); sending the request for settings information to the setting processing system and receiving a response to the request for settings information, the response including settings information indicative of an aggregated setting value aggregated from a plurality of different agricultural vehicles (102) with a corresponding sorting criterion, the control system (114) controlling the controllable subsystem (118) based on the settings information in the response.

11. The agricultural vehicle of claim 10 and further comprising:
the setting generation system (116) configured to generate a settings value for the controllable subsystem (118) on the agricultural vehicle (102), the control system (114) being configured to control the setting generation system (116) based on the aggregated setting value.
